(19) Europäisches Patentamt
European Patent Office
Office européen des brevets

(11) **EP 2 220 170 B1**

(12) **EUROPÄISCHE PATENTSCHRIFT**

(45) Veröffentlichungstag und Bekanntmachung des Hinweises auf die Patenterteilung:
**24.01.2018 Patentblatt 2018/04**

(21) Anmeldenummer: **08862599.1**

(22) Anmeldetag: **11.12.2008**

(51) Int Cl.:
*C09C 1/00* (2006.01)     *C09D 5/24* (2006.01)
*C09D 5/36* (2006.01)     *C09D 7/12* (0000.00)
*C09D 11/037* (2014.01)     *C08K 3/36* (2006.01)
*C08K 9/02* (2006.01)

(86) Internationale Anmeldenummer:
**PCT/EP2008/010528**

(87) Internationale Veröffentlichungsnummer:
**WO 2009/077122 (25.06.2009 Gazette 2009/26)**

(54) **OPTISCH VARIABLE PIGMENTE MIT HOHER ELEKTRISCHER LEITFÄHIGKEIT**

OPTICALLY VARIABLE PIGMENTS OF HIGH ELECTRICAL CONDUCTIVITY

PIGMENTS OPTIQUEMENT VARIABLES DE HAUTE CONDUCTIVITÉ ÉLECTRIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.12.2007 DE 102007061692**

(43) Veröffentlichungstag der Anmeldung:
**25.08.2010 Patentblatt 2010/34**

(73) Patentinhaber: **Merck Patent GmbH**
**64293 Darmstadt (DE)**

(72) Erfinder:
• **KRIETSCH, Burkhard**
**64807 Dieburg (DE)**
• **KUNTZ, Matthias**
**64342 Seeheim-Jugenheim (DE)**
• **RUEGER, Reinhold**
**63322 Rödermark (DE)**

(56) Entgegenhaltungen:
**EP-A2- 0 359 569**

• **GLAUSCH R ET AL: "NEUARTIGE HELLE, LEITFAEHIGE PIGMENTE AUF GLIMMER/METALLOXID-BASIS" FARBE+LACK, CURT R.VINCENTZ VERLAG. HANNOVER, DE, Bd. 96, Nr. 6, 1. Juni 1990 (1990-06-01), Seiten 412-415, XP000136053 ISSN: 0014-7699**

## Beschreibung

Die vorliegende Erfindung betrifft optisch variable Pigmente mit hoher Leitfähigkeit, die ein plättchenförmiges Substrat, welches im wesentlichen aus Siliziumdioxid und/oder Siliziumoxidhydrat besteht, sowie eine das Substrat umhüllende elektrisch leitfähige Schicht umfassen, ein Verfahren zu ihrer Herstellung sowie die Verwendung derartiger Pigmente.

Traditionell werden zur Farbgebung in technischen Anwendungen wie Farben, insbesondere Druckfarben, Lacken, Kunststoffen, keramischen Materialien und dergleichen häufig Perlglanzpigmente verwendet, die neben gewünschten Farbeffekten insbesondere eine hohe Glanzwirkung, einen subtilen Schimmer und eine schwache winkelabhängig variierende Farbgebung erzeugen können. Da sie sich auf Grund ihrer hohen Transparenz besonders gut mit anderen organischen oder anorganischen Farbmitteln mischen lassen, sind viele verschiedene technische Anwendungen auf der Basis solcher Gemische gebräuchlich.

Besonders in den letzten Jahren sind für vielfältige Anwendungsmöglichkeiten solche Pigmente ins Blickfeld des Interesses gerückt, die blickwinkelabhängig wechselnde Farbeigenschaften (Farbflop, optisch variables Verhalten) aufweisen. Solche Eigenschaften sind mit den oben genannten Pigmenttypen dann erhältlich, wenn die Substrate und die darauf befindlichen Schichten strengen Qualitätsanforderungen, insbesondere hinsichtlich Glattheit und Gleichmäßigkeit der aufgebrachten Schichten, geringer Porosität der Beschichtungen und hoher Transparenz der Schichten bei gleichzeitig perfekter Abstimmung der einzelnen Schichtdicken aufeinander, genügen.

Bekannt sind ebenso funktionelle Pigmente, die elektrisch leitfähig sind und insbesondere in technischen Anwendungen zum Tragen kommen. Diese Pigmente bestehen entweder aus elektrisch leitfähigen Materialien oder enthalten diese in einer Beschichtung auf einem Trägermaterial. Dabei können die Trägermaterialien verschiedene geometrische Formen annehmen.

Bekannt sind beispielsweise elektrisch leitfähige Pigmente auf der Basis transparenter plättchenförmiger Substrate, wie mit $(SbSn)O_2$ beschichteter Glimmer oder Glimmer, der eine ein- oder mehrlagige dielektrische Beschichtung und darauf eine äußere $(SbSn)O_2$-Schicht aufweist. Diese Pigmente weisen gegenüber den traditionell als elektrisch leitfähige Pigmente eingesetzten Materialien wie Russ oder Graphit den Vorteil auf, dass sie eine helle bis weissliche beziehungsweise hellgraue Farbgebung besitzen und so den optischen Eindruck des Anwendungsmediums nicht zu stark beeinträchtigen. Sie können, in verschiedene Anwendungsmedien eingebracht, zur Ausbildung einer elektrisch leitfähigen Beschichtung, beispielsweise in Kunststoffartikeln, Fußbodenbelägen und dergleichen, beitragen und sind kommerziell erhältlich (z. B. von der Fa. Merck KGaA unter der Bezeichnung Minatec® 31 CM oder Minatec® 30 CM). Sie sind z. B. in den Patenten DE 38 42 330, DE 42 37 990, EP 0 139 557, EP 0 359 569 und EP 0 743 654 beschrieben.

Da sie weitestgehend transparent sind, lassen sie sich auch gut mit partikulären oder gelösten Farbmitteln, insbesondere mit Farbpigmenten, mischen, wenn das Anwendungsmedium optisch ansprechende bunte Farben aufweisen soll. Je höher jedoch die gewünschte Buntheit, umso grösser muss der Anteil an farbgebenden Pigmenten gewählt werden, wobei es im Anwendungsmedium zu einer anteiligen Verringerung an elektrisch leitfähigen Pigmenten kommt. Damit wird die Ausbildung von Leitpfaden verhindert beziehungsweise werden diese häufig unterbrochen, so dass es zur Störung des elektrischen Leitvermögens im Anwendungsmedium kommt. Selbst schon bei geringen Zusätzen farbgebender Pigmente kann damit, bei einer stets gegebenen Höchstbeladung des Mediums mit Pigmenten, die elektrische Leitfähigkeit des Mediums komplett zusammenbrechen. Wird dem durch überproportionale Erhöhung des Anteils an leitfähigen Pigmenten entgegengewirkt, muss dagegen mit einer Trübung des Mediums, einer Verwässerung der Farbeigenschaften, einer hohen Viskosität in eventuellen Beschichtungslösungen und gegebenenfalls sogar mit einer schlechten Haftung der Beschichtung auf der jeweiligen Grundlage gerechnet werden.

Für viele Anwendungsgebiete wäre es daher wünschenswert, Pigmente zur Verfügung zu haben, die sowohl bunte Farben als auch eine hohe elektrische Leitfähigkeit aufweisen. In der EP 310 340 wurden zu diesem Zwecke bereits Pigmente vorgeschlagen, die auf einem Kern aus Eisenoxidpartikeln eine Schicht aus einem Oxid des Siliziums und /oder Titans sowie eine elektrisch leitfähige Schicht aufweisen. Diese Pigmente weisen einen spezifischen Widerstand von kleiner als $5 \times 10^6$ $\Omega$cm sowie Farben im Bereich von gelb über orange bis rot auf, die der Eigenfarbe der Substrate entsprechen. Bedingt durch die Wahl der Substrate lässt sich jedoch die Farbstellung solcher Pigmente nur in eng begrenzten Bereichen variieren, es sind keine optisch variablen Farbeindrücke beschrieben worden und die erzielbare elektrische Leitfähigkeit ist verbesserungswürdig.

Aus der EP 0 944 097 A1 ist ein helles, elektrisch leitfähiges Pigment bekannt, welches aus einem Substrat und einer aus mit Phosphor und/oder Fluor dotiertem Zinnoxid gebildeten elektrisch leitfähigen Schicht besteht. Zwischen dem Substrat und der leitfähigen Schicht kann eine Zwischenschicht angeordnet sein, die als Diffusionssperre wirkt. Das Substrat kann aus $SiO_2$-Plättchen bestehen. Es wird ein spezifischer Pulverwiderstand von unter 300 $\Omega$cm erhalten.

In R. Glausch, D. Brückner, R. Maisch, Farbe und Lack, 96(6), 1990, 412-415 (XP000136053), werden helle, leitfähige Pigmente auf Glimmerbasis beschrieben, bei denen eine leitfähige, aus mit Antimon dotiertem Zinnoxid bestehende Schicht entweder direkt auf einem Glimmersubstrat oder auf Zwischenschichten, die sich auf dem Glimmersubstrat befinden, angeordnet ist. Der Einfluss der Dicke der elektrisch leitfähigen Schicht und der Teilchengröße des Glimmersubstrates auf den spezifischen Pulverwiderstand der Pigmente wird erläutert.

Gerade für Anwendungsgebiete wie Sicherheitsprodukte oder elektronische Artikel wäre es jedoch wünschenswert, elektrisch leitfähige Pigmente mit ausreichend hoher elektrischer Leitfähigkeit und gleichzeitig optisch variabler Farbgebung zur Verfügung zu haben.

Die Aufgabe der Erfindung bestand daher darin, optisch variable Pigmente mit hoher elektrischer Leitfähigkeit zu entwickeln, die eine möglichst einfache Zusammensetzung aufweisen, eine breite Farbpalette abdecken können, gut in verschiedene Anwendungsmedien integriert und für Massenanwendungen einfach und kostengünstig produziert werden können.

Eine weitere Aufgabe der Erfindung bestand in der Bereitstellung eines einfachen Verfahrens zur Herstellung solcher Pigmente.

Zusätzlich bestand eine weitere Aufgabe der Erfindung darin, die Verwendung der oben genannten Pigmente aufzuzeigen.

Die Aufgabe der Erfindung wird durch optisch variable Pigmente mit hoher Leitfähigkeit gemäß Anspruch 1 gelöst.

Außerdem wird die Aufgabe der Erfindung durch ein Verfahren zur Herstellung von optisch variablen Pigmenten mit hoher Leitfähigkeit gelöst, welches die folgenden Schritte umfasst:

a) optional Beschichten eines plättchenförmigen Substrates, welches mindestens eine Dicke von 80 nm sowie eine Ausdehnung in Länge und Breite zwischen 5 und 60 $\mu$m aufweist und zu mindestens 80 Gew.-%, bezogen auf die Gesamtmasse des Substrates, aus Siliziumdioxid und/oder Siliziumoxidhydrat besteht, mit mindestens einem Schichtpaket aus einer dielektrischen Schicht mit einer Brechzahl n $\geq$ 1,8 und einer dielektrischen Schicht mit einer Brechzahl n < 1,8, wobei die Schicht mit einer Brechzahl n $\geq$ 1,8 unmittelbar auf dem Substrat sowie optional zusätzlich auf der Schicht mit einer Brechzahl n < 1,8 aufgebracht wird, mit der Maßgabe, dass jeweils eine Schicht mit einer Brechzahl n < 1,8 direkt unterhalb der elektrisch leitfähigen Schicht aufgebracht wird, wobei ein Trägerplättchen erhalten wird,
b) umhüllendes Beschichten des in Schritt a) erhaltenen Trägerplättchens mit einer elektrisch leitfähigen Schicht aus einem mit Antimon dotiertem Zinnoxid.

Des weiteren wird die Aufgabe der Erfindung durch die Verwendung der genannten Pigmente in Farben, Lacken, Druckfarben, Kunststoffen, Sicherheitsanwendungen, Fußbodenbelägen, Folien, Formulierungen, keramischen Materialien, Gläsern, Papier, zur Lasermarkierung, im Wärmeschutz, in Trockenpräparaten und Pigmentpräparationen gelöst.

Die erfindungsgemäßen Pigmente sind optisch variabel und umfassen ein plättchenförmiges Substrat, welches zu mindestens 80 Gew.-%, bezogen auf die Gesamtmasse des Substrates, aus Siliziumdioxid und/oder Siliziumoxidhydrat besteht und eine Mindestdicke von 80 nm aufweist, sowie eine das Substrat umhüllende elektrisch leitfähige Schicht.

Optisch variable Pigmente sind solche Pigmente, die unter verschiedenen Beleuchtungs- und/oder Betrachtungswinkeln einen unterschiedlichen visuell wahrnehmbaren Farb- und/oder Helligkeitseindruck hinterlassen. Bei unterschiedlichen Farbeindrücken wird diese Eigenschaft als Farbflop bezeichnet. Bevorzugt weisen die erfindungsgemäßen optisch variablen Pigmente unter mindestens zwei verschiedenen Beleuchtungs- und/oder Betrachtungswinkeln mindestens zwei und höchstens vier, vorzugsweise aber unter zwei verschiedenen Beleuchtungs- und/oder Betrachtungswinkeln zwei oder unter drei verschiedenen Beleuchtungs- und/oder Betrachtungswinkeln drei optisch klar unterscheidbare diskrete Farben auf. Vorzugsweise liegen jeweils nur die diskreten Farbtöne und keine Zwischentöne vor, dass heisst, dass unter verschiedenen Betrachtungswinkeln ein klarer Wechsel von einer Farbe zu einer anderen Farbe erkennbar ist. Es sind jedoch auch Ausführungsformen geeignet, die beim Wechsel des Betrachtungswinkels einen Farbverlauf zeigen.

Als plättchenförmig im Sinne der vorliegenden Erfindung wird ein flaches Gebilde angesehen, welches mit seiner Ober- und Unterseite zwei annähernd parallel zueinander stehende Oberflächen aufweist, deren Ausdehnung in Länge und Breite die größte Ausdehnung des Pigmentes darstellt. Der Abstand zwischen den genannten Oberflächen, der die Dicke des Plättchens darstellt, weist dagegen eine geringere Ausdehnung auf.

Die Ausdehnung der Substrate für die erfindungsgemäßen Pigmente in Länge und Breite beträgt dabei zwischen 5 und 60 $\mu$m. Sie stellt auch den Wert dar, der gewöhnlich als Teilchengröße der Substrate bezeichnet wird. Es ist eine enge Teilchengrößenverteilung der Substrate bevorzugt. Die Dicke der Substrate beträgt mindestens 80 nm und bis zu 5 $\mu$m, vorzugsweise von 0,1 bis 4,5 $\mu$m und besonders bevorzugt von 0,2 bis 1 $\mu$m.

Die Substrate weisen ein Aspektverhältnis (Verhältnis von Länge zu Dicke) von mindestens 2, bevorzugt von mindestens 10 und besonders bevorzugt von mindestens 50 auf.

Das Substrat besteht zu mindestens 80 Gew.-%, bezogen auf die Gesamtmasse des Substrates, aus Siliziumdioxid und/oder Siliziumoxidhydrat. Zusätzlich kann es bis zu 20 Gew.-%, bezogen auf die Gesamtmasse des Substrates, an partikulären und/oder gelösten Farbmitteln enthalten. Vorzugsweise besteht das Substrat zu 95 bis nahezu 100 Gew.-% aus Siliziumoxid und/oder Siliziumoxidhydrat, wobei lediglich Spuren oder geringe prozentuale Anteile von Fremdionen enthalten sein können.

Solche Substrate werden auch als $SiO_2$-Plättchen bezeichnet, selbst wenn sie Anteile an hydratisiertem Siliziumoxid enthalten.

Sie sind hochtransparent und, wenn keine Farbmittel enthalten sind, farblos. Sie weisen ebene und sehr glatte Oberflächen und eine einheitliche Schichtdicke auf. Bedingt durch das weiter unten beschriebene bevorzugte Herstellungsverfahren für die $SiO_2$-Plättchen besitzen diese an den Seitenflächen scharfe Bruchkanten, die spitze, zackenartige Ausstülpungen aufweisen können. Besonders bevorzugt sind Substrate, die eine enge Teilchengrößenverteilung aufweisen, insbesondere solche, bei denen der Feinkornanteil minimiert ist.

Als transparent werden die Substrate dann angesehen, wenn sie sichtbares Licht im wesentlichen, d.h. zu mindestens 90%, transmittieren.

Des weiteren umfassen die erfindungsgemäßen Pigmente eine elektrisch leitfähige Schicht, die die oben genannten Substrate umhüllt.

Als Material für die elektrisch leitfähige Schicht wird dotiertes Zinnoxid eingesetzt, welches mit Antimon dotiert ist. Der Anteil des Dotierstoffes in der leitfähigen Schicht kann 0,1 bis 30 Gew.-% betragen, vorzugsweise liegt er im Bereich von 2 bis 15 Gew.-%. Das Verhältnis Zinn zu Antimon kann 4:1 bis 100:1 betragen, vorzugsweise liegt das Verhältnis bei 8:1 bis 50:1. Geringere Antimongehalte beeinflussen die Leitfähigkeit in negativer Weise, wohingegen höhere Antimongehalte die Transparenz der elektrisch leitfähigen Schicht der erfindungsgemäßen Pigmente herabsetzen.

Der Anteil der elektrisch leitfähigen Schicht, bezogen auf das plättchenförmige Substrat, liegt bei 20 bis 40 Gew.-%. Der Antimongehalt liegt vorzugsweise bei 1 bis 20 Mol-%, und besonders bevorzugt bei 5 bis 15 Mol-%, bezogen auf die Gesamtmenge an Antimon- und Zinnoxid.

Die elektrisch leitfähige Schicht weist eine Schichtdicke von 20 nm bis 50 nm auf. In der Regel ist die elektrisch leitfähige Schicht so dünn, dass die geometrische Form und das Aspektverhältnis der Substrate im elektrisch leitfähigen Pigment weitestgehend erhalten bleibt.

Erfindungsgemäß kann sich zwischen dem Substrat und der elektrisch leitfähigen Schicht noch mindestens ein Schichtpaket befinden, welches aus einer dielektrischen Schicht mit einer Brechzahl $n \geq 1{,}8$ und einer dielektrischen Schicht mit einer Brechzahl $n < 1{,}8$ besteht. Dabei befindet sich die Schicht mit einer Brechzahl $n \geq 1{,}8$ unmittelbar auf dem Substrat und die Schicht mit einer Brechzahl $n < 1{,}8$ unmittelbar unterhalb der elektrisch leitfähigen Schicht. Sind zwei oder mehr der oben beschriebenen Schichtpakete vorhanden, befindet sich die Schicht mit einer Brechzahl $n \geq 1{,}8$ außerdem auch auf allen Schichten mit einer Brechzahl $n < 1{,}8$, die sich nicht unmittelbar unterhalb der elektrisch leitfähigen Schicht befinden. Mindestens eine, bevorzugt jedoch mehrere und ganz besonders bevorzugt jede dieser Schichten tragen dabei durch Interferenz und/oder Eigenfarbe zur Farbgebung des Pigmentes bei.

Vorzugsweise weisen die erfindungsgemäßen Pigmente lediglich ein oder kein oben beschriebenes Schichtpaket auf.

Als dielektrisch wird eine Schicht dann bezeichnet, wenn sie den elektrischen Strom nicht leitet.

Ist ein Schichtpaket aus dielektrischen Schichten vorhanden, so besteht es aus einer hochbrechenden Schicht und einer niedrigbrechenden Schicht. Bei der/den dielektrischen Schicht(en) aus einem Material mit einer Brechzahl $n \geq 1{,}8$ (hochbrechende Schichten) handelt es sich um Schichten, die vorzugsweise aus $TiO_2$, Titanoxidhydrat, Titansuboxiden, $Fe_2O_3$, FeOOH, $SnO_2$, ZnO, $ZrO_2$, $Ce_2O_3$, CoO, $Co_3O_4$, $V_2O_5$, $Cr_2O_3$ und/oder Mischphasen davon bestehen. Diese Materialien sind entweder farblos oder besitzen eine Eigenfarbe auf Grund von Eigenabsorption. Besonders bevorzugt sind $TiO_2$, Titanoxidhydrat, $Fe_2O_3$, FeOOH und $SnO_2$. Insbesondere bevorzugt sind $TiO_2$ und Titanoxidhydrat. Da diese durch Vorabbelegung mit Zinnoxid über eine besonders hohe Brechzahl verfügen, sind auch Mischphasen aus Zinnoxid mit $TiO_2$ und Titanoxidhydrat besonders bevorzugt, die sich in diesen Fällen aus den geringen Mengen an Zinnoxid und der nachfolgenden Schicht aus $TiO_2$ und/oder Titanoxidhydrat bilden.

Die dielektrischen Schicht(en) aus einem Material mit einer Brechzahl $n < 1{,}8$ (niedrigbrechende Schichten) bestehen vorzugsweise aus $SiO_2$, Siliziumoxidhydrat, $Al_2O_3$, Aluminiumoxidhydrat, aus Mischphasen davon oder aus $MgF_2$. Besonders bevorzugt sind $SiO_2$ und/oder Siliziumoxidhydrat. Wie bereits vorab beschrieben, befindet sich, sofern ein Schichtpaket vorhanden ist, jeweils eine niedrigbrechende Schicht direkt unterhalb der elektrisch leitfähigen Schicht.

Besonders bevorzugt ist ein Schichtpaket, welches aus einer $TiO_2$-Schicht und einer $SiO_2$-Schicht besteht.

Das oder die oben beschriebene Schichtpaket(e) muss/müssen das Substrat nicht zwangsläufig umhüllen. Für die Herstellung der erfindungsgemäßen Pigmente ist es ausreichend, wenn diese Schichtpakete beidseitig des Substrates ausgebildet sind, d.h. sich auf den größten Flächen des Substrates befinden. Es sind jedoch die Ausführungsformen bevorzugt, bei denen das oder die Schichtpaket(e), sofern vorhanden, das Substrat weitestgehend vollständig umhüllen.

Die Schichtdicken der Schichten im Schichtpaket werden so gewählt, dass mindestens eine, bevorzugt jedoch alle Schichten durch Interferenz und/oder Eigenabsorption einen eigenständigen Beitrag zur Farbgebung der erfindungsgemäßen Pigmente leisten, d.h. optisch aktiv sind. Dieser Beitrag kann sowohl in der Verstärkung, Unterdrückung oder der Modifizierung einer Interferenzfarbe als auch, zusätzlich oder alternativ, in der Verstärkung des optisch variablen Verhaltens der erfindungsgemäßen Pigmente bestehen. Die bevorzugten Schichtdicken für hochbrechende Schichten liegen im Bereich von 10 bis 200 nm, besonders bevorzugt von 20 bis 180 nm, während die bevorzugten Schichtdicken für niedrigbrechende Schichten im Bereich von 15 bis 300 nm, besonders bevorzugt von 25 bis 250 nm liegen.

Die erfindungsgemäßen Pigmente besitzen eine hohe elektrische Leitfähigkeit, die, ausgedrückt durch den spezifischen Widerstand des pulverförmigen Pigmentes, gegenüber dem aus dem Stand der Technik bekannten Glimmer mit einer leitfähigen Schicht etwa um den Faktor 10 verbessert ist. Gleichzeitig sind sie optisch variabel, d.h. zeigen unter verschiedenen Betrachtungswinkeln im Anwendungsmedium verschiedene diskrete Farben. Das ist besonders überraschend bei den erfindungsgemäßen Pigmenten, die lediglich aus dem oben beschriebenen Substrat und einer darauf befindlichen umhüllenden elektrisch leitfähigen Schicht bestehen. Gewöhnlicherweise beruhen die aus dem Stand der Technik bekannten optisch variablen Pigmente auf einem, teilweise recht komplizierten, Mehrschichtaufbau, der eine sehr genaue Abstimmung von Schichtdicken und Materialien der einzelnen Schichten erfordert. Daher war es in keiner Weise zu erwarten, dass der erfindungsgemäße einfache Aufbau aus Substrat und einer einzigen elektrisch leitfähigen Schicht bereits zu optisch variablen Pigmenten mit ausnehmend guter elektrischer Leitfähigkeit führt. Der Mechanismus, der zur Ausbildung dieser vergleichsweise hohen elektrischen Leitfähigkeit führt, ist nicht geklärt. Es wird jedoch vermutet, dass sowohl die Tatsache, dass es zwischen dem Substrat und der elektrisch leitfähigen Schicht auch bei einer Wärmebehandlung des Pigmentes nicht zur Ausbildung von Mischoxiden kommt, als auch die scharfkantigen spitzen Seitenflächen der Pigmente zu einer erhöhten elektrischen Leitfähigkeit und im Anwendungsmedium zu einer verbesserten Ausbildung von Leitpfaden führen können. Diese hohe elektrische Leitfähigkeit ermöglicht eine relativ geringe Konzentration der erfindungsgemäßen Pigmente im jeweiligen Anwendungsmedium bei gleichzeitiger optisch ansprechender Farbgebung, die noch dazu, abhängig von der wachsenden Dicke des Substrates, wunschgemäß variiert werden kann. Gleichzeitig weist das Pigmentpulver hohe Helligkeitswerte auf, die den Grautönen elektrisch leitfähiger Pigmente aus dem Stand der Technik an Attraktivität deutlich überlegen sind.

Auf Grund ihrer hohen elektrischen Leitfähigkeit zeigen die erfindungsgemäßen Pigmente auch spezifische Wechselwirkungen in elektrischen und elektromagnetischen Feldern. Hierzu gehören z. B. die Dämpfung oder auch Reflexion von hochfrequenten elektromagnetischen Feldern sowie die gezielte Veränderung der elektrischen Flussdichte in einer dielektrischen Beschichtung im elektrischen Feld. Dieses ist auch dann der Fall, wenn die erfindungsgemäßen leitfähigen Pigmente in einem dielektrischen Bindemittel unterhalb der Konzentrationsschwelle vorliegen, bei der sich durchgehende Leitpfade ausbilden können.

Letzteres ist besonders für viele Sicherheitsanwendungen, insbesondere in Sicherheitsprodukten, von Vorteil, die zur Prüfung von ansonsten unsichtbaren Sicherheitsmerkmalen oft dem Einfluss elektromagnetischer Felder unterliegen. Hier können die erfindungsgemäßen Pigmente beispielsweise zur Ablenkung von Feldlinien eines elektrischen Wechselfeldes dienen, womit eine lokale Verstärkung des elektromagnetischen Feldes erhalten wird (ein so genannter "Hot Spot"). Mit Hilfe dieser Hot Spots können beispielsweise elektrolumineszierende Stoffe zum Leuchten gebracht werden.

Die erfindungsgemäßen Pigmente können mit Hilfe eines einfachen und kostengünstigen Herstellungsverfahrens erhalten werden.

Gegenstand der vorliegenden Erfindung ist daher auch ein Verfahren zur Herstellung von optisch variablen Pigmenten, umfassend die folgenden Schritte:

a) optional Beschichten eines plättchenförmigen Substrates, welches mindestens eine Dicke von 80 nm sowie eine Ausdehnung in Länge und Breite zwischen 5 und 60 $\mu$m aufweist und zu mindestens 80 Gew.-%, bezogen auf die Gesamtmasse des Substrates, aus Siliziumdioxid und/oder Siliziumoxidhydrat besteht, mit mindestens einem Schichtpaket aus einer dielektrischen Schicht mit einer Brechzahl n $\geq$ 1,8 und einer dielektrischen Schicht mit einer Brechzahl n < 1,8, wobei die Schicht mit einer Brechzahl n $\geq$ 1,8 unmittelbar auf dem Substrat sowie optional zusätzlich auf der Schicht mit einer Brechzahl n < 1,8 aufgebracht wird, mit der Maßgabe, dass jeweils eine Schicht mit einer Brechzahl n < 1,8 direkt unterhalb der elektrisch leitfähigen Schicht aufgebracht wird, wobei ein Trägerplättchen erhalten wird,
b) umhüllendes Beschichten des in Schritt a) erhaltenen Trägerplättchens mit einer elektrisch leitfähigen Schicht aus einem mit Antimon dotiertem Zinnoxid.

Obwohl es möglich ist, das Beschichten des Substrates im Schritt a) so zu gestalten, dass nur die großen Flächen des Substrates jeweils durch die Beschichtung belegt werden, beispielsweise mittels eines CVD- oder PVD-Verfahrens oder wenn das Substrat gemeinsam mit der Beschichtung in einem Bandverfahren hergestellt wird, sind doch Verfahren bevorzugt, bei denen die Beschichtung des plättchenförmigen Substrates in den Schritten a) und/oder b) im Sol-Gel-Verfahren, oder nasschemisch aus anorganischen Ausgangsstoffen erfolgt.

Bedingt durch die Einfachheit des Verfahrens und die gute Verfügbarkeit an Ausgangsstoffen ist es besonders bevorzugt, wenn die Beschichtung des Substrates in den Schritten a) und/oder b) nasschemisch aus anorganischen Ausgangsstoffen erfolgt.

Als elektrisch leitfähige Schicht in Schritt b) wird ein mit Antimon dotiertes Zinnoxid aufgebracht.

Die erfindungsgemäß eingesetzten plättchenförmigen Substrate werden vorteilhafterweise nach dem in WO 93/08237 beschriebenen Bandverfahren hergestellt, auf welches hiermit vollinhaltlich Bezug genommen wird. Als Einsatzstoffe für die Erzeugung von $SiO_2$-Plättchen eignen sich insbesondere Natron- oder Kaliwasserglaslösungen, die auf ein kontinuierliches Band aufgebracht, getrocknet, vom Band in Plättchenform gelöst, mit Wasser und Säure behandelt, und gegebenenfalls gewaschen, getrocknet, geglüht und optional gemahlen und/oder klassiert werden.

Die Ausgangsstoffe können zusätzlich Netzwerkbildner, oberflächenaktive Substanzen, Viskositätserhöher, weitere Additive sowie partikuläre und/oder gelöste Farbmittel enthalten. Diese sind ebenfalls in WO 93/08237 ausführlicher beschrieben.

Mit Hilfe des beschriebenen Verfahrens lassen sich $SiO_2$-Plättchen mit einheitlicher Schichtdicke und scharfen Bruchkanten herstellen. Bei der Einstellung der Schichtdicke ist zu beachten, dass während des Trocknens bei einer etwa 15%-igen Wasserglaslösung eine Schichtdickenreduktion auf etwa 1/10 der aufgebrachten Nassschichtdicke erfolgt. Daher muss die Nassschichtdicke zur Herstellung der Substrate für die erfindungsgemäßen Pigmente mindestens 800 nm, vorzugsweise aber mindestens 1 $\mu$m betragen.

Vorteilhafterweise werden entweder die erhaltenen Substrate oder aber die mit einer elektrisch leitfähigen Schicht versehenen Pigmente gemäß der vorliegenden Erfindung einer Klassierung unterworfen, die den Feinkornanteil reduziert und eine enge Korngrößenverteilung der Substrate bzw. Pigmente erzielt.

Für die Beschichtung mit der elektrisch leitfähigen Schicht wird vorteilhafterweise ebenfalls ein nasschemisches Verfahren mit anorganischen Ausgangsstoffen ausgewählt. Solche Verfahren sind an sich bekannt. Beispielsweise kann das in der EP 139 557 beschriebene Verfahren eingesetzt werden.

Nachfolgend beschrieben wird das Aufbringen einer elektrisch leitfähigen Schicht aus mit Antimon dotiertem Zinnoxid. Die gewünschte homogene Verteilung von Zinn und Antimon in der leitfähigen Schicht lässt sich dadurch erreichen, dass Salze von Zinn und Antimon, beispielsweise Chloride, entweder gemeinsam in einer Lösung oder in zwei getrennten Lösungen kontinuierlich und im vorbestimmten Mischungsverhältnis der wässrigen Suspension des Substrates bei einem geeigneten pH-Wert im Bereich von 1 bis 5 und einer geeigneten Temperatur von 50 bis 90°C so zudosiert werden, dass jeweils unmittelbar eine Hydrolyse und Abscheidung auf dem plättchenförmigen Substrat erfolgt.

Nach der Beendigung der Beschichtung bei Erreichen der gewünschten Schichtdicke werden die Pigmente aus der Suspension abgetrennt, ggf. gewaschen und getrocknet und in der Regel bei Temperaturen im Bereich von 400°C bis 1100°C, bevorzugt von 700°C bis 950°C geglüht.

Zur Verbesserung der Leitfähigkeit können die Pigmente optional auch unter einer Inertgasatmospäre oder unter einer reduzierenden Atmosphäre, z.B. unter Formiergas, geglüht werden.

Die erhaltenen Pigmente sind nahezu vollständig transparent und besitzen eine weissliche bzw. helle Pulverfarbe. Beim Ausrichten auf einer Oberfläche beziehungsweise beim Einbringen in ein Anwendungsmedium, in dem sie sich parallel zu einer Oberfläche ausrichten können, zeigen sie abhängig vom Betrachtungswinkel wechselnde bunte Farben.

Für den Fall, dass zwischen dem Substrat und der elektrisch leitfähigen Schicht noch ein oder mehrere Schichtpakete aus einer dielektrischen Schicht mit einer Brechzahl n $\geq$ 1,8 und einer dielektrischen Schicht mit einer Brechzahl n < 1,8 aufgebracht werden sollen, sind als Verfahren zu deren Aufbringung alle für die Beschichtung von Interferenzpigmenten geeigneten nasschemischen Verfahren, die dem Fachmann geläufig sind, geeignet. Diese sind beispielsweise in den Druckschriften DE 14 67 468, DE 19 59 998, DE 20 09 566, DE 22 14 545, DE 22 15 191, DE 22 44 298, DE 23 13 331, DE 25 22 572, DE 31 37 808, DE 31 37 809, DE 31 51 355, DE 32 11 602 und DE 32 35 017 beschrieben worden.

Gegenstand der vorliegenden Erfindung ist auch die Verwendung der vorab beschriebenen erfindungsgemäßen Pigmente in Farben, Lacken, Druckfarben, Kunststoffen, in Sicherheitsanwendungen, Fußbodenbelägen, Folien, Formulierungen, keramischen Materialien, Gläsern, Papier, zur Lasermarkierung, im Wärmeschutz, in Trockenpräparaten oder in Pigmentpräparationen.

Bedingt durch ihr optisch variables Farbverhalten sind die erfindungsgemäßen Pigmente gut geeignet, lediglich auf Grund ihrer Farbeigenschaften zur Pigmentierung von Anwendungsmedien der vorab genannten Art eingesetzt zu werden. Dabei werden sie in der gleichen Weise wie übliche Interferenzpigmente eingesetzt. Besonders vorteilhaft ist jedoch, dass sie neben den attraktiven Farbeigenschaften auch über eine gute elektrische Leitfähigkeit verfügen, die sie insbesondere für den Einsatz in technischen Anwendungen, die elektrisch leitfähige Beschichtungen erfordern, als auch ganz besonders für die Anwendung in verschiedenen Sicherheitsprodukten geeignet machen, die gelegentlich zur Abprüfung von Sicherheitsmerkmalen elektrisch leitfähige Pigmente in Beschichtungen benötigen. Solche Sicherheitsprodukte sind beispielsweise Banknoten, Schecks, Kreditkarten, Aktien, Pässe, Ausweisdokumente, Führerscheine, Eintrittskarten, Wertmarken etc., um nur einige zu nennen.

Beim Einsatz der Pigmente in Lacken und Farben sind alle dem Fachmann bekannten Anwendungsbereiche möglich, wie z.B. Pulverlacke, Automobillacke, Druckfarben für den Tief-, Offset-, Sieb-, oder Flexodruck sowie Lacke in Außenanwendungen. Für die Herstellung von Druckfarben ist eine Vielzahl von Bindern, insbesondere wasserlösliche, aber auch lösemittelhaltige Typen, z.B. auf der Basis von Acrylaten, Methacrylaten, Polyestern, Polyurethanen, Nitrocellulose, Ethylcellulose, Polyamid, Polyvinylbutyrat, Phenolharzen, Melaminharzen, Maleinharzen, Stärke oder Polyvinylalkohol geeignet. Bei den Lacken kann es sich um Wasser- oder lösemittelbasierte Lacke handeln, wobei die Auswahl der Lackbestandteile dem Allgemeinwissen des Fachmannes unterliegt.

Die erfindungsgemäßen Pigmente können ebenso vorteilhaft zur Herstellung von leitfähigen Kunststoffen und Folien eingesetzt werden, beispielsweise für leitfähige Folien und Scheiben, Kunststoffbehältnisse und Formkörper für alle dem Fachmann bekannten Anwendungen, die eine elektrische Leitfähigkeit erfordern. Als Kunststoffe eignen sich dabei alle gängigen Kunststoffe, beispielsweise Duromere und thermoplastische Kunststoffe. Die erfindungsgemäßen Pigmente unterliegen dabei denselben Bedingungen wie übliche Perlglanz- bzw. Interferenzpigmente.

Besonderheiten der Einbringung in Kunststoffe sind daher beispielsweise in R. Glausch, M. Kieser, R. Maisch, G. Pfaff, J. Weitzel, Perlglanzpigmente, Curt Vincentz Verlag, 1996, 83 ff., beschrieben.

Die erfindungsgemäßen Pigmente sind auch zur Herstellung von fließfähigen Pigmentpräparationen und Trockenpräparaten geeignet, die ein oder mehrere erfindungsgemäße Pigmente, gegebenenfalls weitere Pigmente bzw. Farbmittel (siehe unten), Bindemittel und optional ein oder mehrere Additive enthalten. Unter Trockenpräparaten sind auch Präparate zu verstehen, die 0 bis 8 Gew.-%, vorzugsweise 2 bis 8 Gew.-%, insbesondere 3 bis 6 Gew.-%, an Wasser und/oder eines Lösemittels oder Lösemittelgemisches enthalten. Die Trockenpräparate liegen vorzugsweise als Pearlets, Pellets, Granulate, Chips, Würstchen oder Briketts vor und weisen Teilchengrößen von etwa 0,2 bis 80 mm auf.

Es versteht sich von selbst, dass die erfindungsgemäßen Pigmente in den verschiedensten Anwendungsmedien je nach Bedarf mit weiteren organischen und/oder anorganischen Farbmitteln und/oder elektrisch leitfähigen Materialien im Gemisch eingesetzt werden können. Die Mischungsverhältnisse sind hierbei in keiner Weise limitiert, so lange die Pigmentkonzentration im Medium hoch genug ist, um die gewünschten optischen und/oder funktionellen Eigenschaften zu erzielen, aber niedrig genug, um die erforderliche Viskosität bzw. die gewünschten Eigenschaften nicht negativ zu beeinflussen. Dabei können sie in jedem Verhältnis mit handelsüblichen Zusatzstoffen, Füllstoffen und/oder Bindemittelsystemen gemischt werden.

Die erfindungsgemäßen Pigmente weisen ein optisch variables Farbverhalten auf und sind daher für viele Anwendungsmedien geeignet, die solche Farbeigenschaften erfordern. Gleichzeitig sind sie jedoch auch elektrisch leitfähig, so dass sie im Anwendungsmedium zur Erzeugung leitfähiger Schichten befähigt sind. Beide Eigenschaften erweisen sich als besonders vorteilhaft beim Einsatz der erfindungsgemäßen Pigmente in Sicherheitsanwendungen, wo sie zur Erzeugung sowohl sichtbarer als auch unsichtbarer Sicherheitsmerkmale dienen können. Sie lassen sich daher in besonders vorteilhafter Weise in Sicherheitsanwendungen zur Erzeugung multipler Sicherheitsmerkmale einsetzen.

Die vorliegende Erfindung soll nachfolgend anhand von Beispielen erläutert werden, die die Erfindung beschreiben, aber nicht beschränken sollen.

Beispiel 1:

100g SiO$_2$-Plättchen (Dicke: 300 nm, Teilchengrösse 10-50 $\mu$m) werden in 1900 ml VE-Wasser suspendiert und die Suspension mit Salzsäure auf pH 2,0 eingestellt. Die SiO$_2$-Plättchen werden mit einer Schicht aus Antimon dotiertem Zinnoxid belegt, indem bei einer Temperatur von 75°C unter Rühren eine Mischung aus 177,2 g einer 50 Gew.-%igen wässrigen SnCl$_4$-Lösung, 56 ml HCl (37 Gew.-%), 38,3 g einer 35 Gew.-%igen wässrigen SbCl$_3$-Lösung kontinuierlich zur Suspension zudosiert wird. Durch gleichzeitig geregelte Zugabe von Natronlauge wird der pH-Wert konstant gehalten. Nach Zugabe der Gesamtmenge von 290 ml der Lösung wird noch 30 min bei 75°C nachgerührt, anschließend unter Rühren auf Raumtemperatur abgekühlt und die Reaktionsmischung auf pH 3 eingestellt. Das erhaltenen Pigment wird über eine Nutsche abfiltiert, mit Wasser gewaschen, bei 140°C getrocknet und 30 min bei 850°C geglüht. Man erhält 157,4,g Pigmentpulver. Das Verhältnis Sn:Sb in der Beschichtung beträgt 85:15. Zur Messung des spezifischen Widerstandes des Pigmentpulvers wird in einem Acrylglas-Rohr mit einem Durchmesser von 2 cm eine Menge von 0,5 g Pigment mit Hilfe eines Gewichts von 10 Kg mit einem Metallstempel gegen eine Metallelektrode zusammengepresst. An den so verpressten Pigmenten wird der elektrische Widerstand R gemessen. Aus der Schichtdicke L des komprimierten Pigments ergibt sich der spezifische Widerstand p gemäß der Beziehung

$$\rho = R* \pi*(d/2)^2/L \text{ (Ohm*cm)}$$

Das Pigmentpulver ist bläulich weiss und hat einen Pulverwiderstand von 12 Ohm*cm.

**Vergleichsbeispiel:**

100 g Glimmer (10-50 $\mu$m) werden in 1900 ml VE-Wasser suspendiert und die Suspension mit Salzsäure auf pH 2,0 eingestellt. Die Glimmerplättchen werden analog zu Beispiel 1 mit einer Schicht aus Antimon dotiertem Zinnoxid belegt. Das erhaltenen Pigment wird über eine Nutsche abfiltriert, mit Wasser gewaschen, bei 140°C getrocknet und 30 min bei 750°C geglüht. Man erhält 158 g Pigmentpulver. Das Verhältnis Sn:Sb in der Beschichtung beträgt 85:15.
Das Pigmentpulver ist hellgrau und hat einen Pulverwiderstand von 65 Ohm*cm.

**Anwendungsbeispiel:**

Prüfung der Leitfähigkeit im Lackfilm

Die Pigmente aus dem erfindungsgemäßen Beispiel (Pigment 1) und dem Vergleichsbeispiel (Pigment 2) werden jeweils in NC-Lack (6% Collodium und 6% Butylacrylat in einem Lösemittelgemisch) dispergiert. Mit den Lackzubereitungen werden jeweils 100 $\mu$m dicke PET-Folien beschichtet. Als Blindprobe wird eine Folie mit einem NC-Lack beschichtet, der keine leitfähigen Pigmente enthält. Die Konzentration der Pigmente in der trockenen Lackschicht beträgt etwa 30 Gew.-%, bezogen auf die Trockenmase des Lackes. Die Trockenschichtdicke der Lackschicht beträgt etwa 25 $\mu$m. Nach Trocknung der Lackschichten wird mit Hilfe einer Federzungenelektrode der Ableitwiderstand der Lackschicht nach DIN 53482 gemessen. Die Ergebnisse sind in Tabelle 1 dargestellt.
Die Farbe der Lackfilme wird gegen einen schwarzen Hintergrund beurteilt. Hierzu werden die Lackfilme auf einen schwarzen Untergrund (schwarze Pappe oder Folie) geklebt und unter steilem (ca. 70 Grad, Farbe 1) und flachem (ca. 150 Grad, Farbe 2) Winkel betrachtet. Die Ergebnisse sind ebenfalls aus Tabelle 1 ersichtlich.

Tabelle 1:

| Pigment | Oberflächenwiderstand | Farbe 1 | Farbe 2 |
|---|---|---|---|
| 1 (Erfindung) | 45 kOhm | blaugrün | lila |
| 2 (Vergleich) | 25 MOhm | grau | grau |
| 3 (Lack ohne Pigment) | > 10 GOhm | schwarz | schwarz |

Aus dem Vergleich zwischen erfindungsgemäßem und Vergleichspigment ist ersichtlich, dass lediglich das erfindungsgemäße Pigment bei der vorhandenen niedrigen Pigmentkonzentration eine gute elektrische Leitfähigkeit sowie eine intensive winkelabhängige Farbgebung zeigt. Während die elektrische Leitfähigkeit des Lackes, der das Vergleichspigment enthält, um eine Größenordnung schlechter als die des erfindungsgemäßen Beispiels ist, weist der Lack eine unattraktive graue Farbgebung (schwarzer Hintergrund) auf. Erwartungsgemäß weist der Lack ohne elektrisch leitfähiges Pigment eine wiederum um Größenordnungen geringere elektrische Leitfähigkeit und, bedingt durch den schwarzen Hintergrund, eine schwarze Farbe auf.

**Patentansprüche**

1. Pigmente, umfassend ein plättchenförmiges Substrat, welches mindestens eine Dicke von 80 nm sowie eine Ausdehnung in Länge und Breite zwischen 5 und 60 $\mu$m aufweist und zu mindestens 80 Gew.-%, bezogen auf die Gesamtmasse des Substrates, aus Siliziumdioxid und/oder Siliziumoxidhydrat besteht, sowie eine das Substrat umhüllende elektrisch leitfähige Schicht aus mit Antimon dotiertem Zinnoxid mit einer Schichtdicke von 20 bis 50 nm, wobei der Anteil der elektrisch leitfähigen Schicht, bezogen auf das Substrat, 20 bis 40 Gew.% beträgt.

2. Pigmente gemäß Anspruch 1, **dadurch gekennzeichnet, dass** sich zwischen dem Substrat und der elektrisch leitfähigen Schicht mindestens ein Schichtpaket bestehend aus einer dielektrischen Schicht mit einer Brechzahl n $\geq$ 1,8 und einer dielektrischen Schicht mit einer Brechzahl n < 1,8 befindet, wobei sich die Schicht mit einer Brechzahl n $\geq$ 1,8 unmittelbar auf dem Substrat sowie optional auf der Schicht mit einer Brechzahl n < 1,8 befindet, mit der Maßgabe, dass jeweils eine Schicht mit einer Brechzahl n < 1,8 direkt unterhalb der elektrisch leitfähigen Schicht angeordnet ist.

3. Pigmente gemäß Anspruch 1 oder 2, **dadurch gekennzeichnet, dass** das Substrat ein SiO$_2$-Plättchen ist.

4. Pigmente gemäß Anspruch 2 oder 3, **dadurch gekennzeichnet, dass** die dielektrische Schicht aus einem Material mit einer Brechzahl n $\geq$ 1,8 aus TiO$_2$, Titanoxidhydrat, Titansuboxiden, Fe$_2$O$_3$, FeOOH, SnO$_2$, ZnO, ZrO$_2$, Ce$_2$O$_3$,

$CoO$, $Co_3O_4$, $V_2O_5$, $Cr_2O_3$ und/oder Mischphasen davon besteht.

5. Pigmente gemäß einem oder mehreren der Ansprüche 2 bis 4, **dadurch gekennzeichnet, dass** die dielektrische Schicht aus einem Material mit einer Brechzahl n < 1,8 aus $SiO_2$, Siliziumoxidhydrat, $Al_2O_3$, Aluminiumoxidhydrat, Mischphasen davon oder aus $MgF_2$ besteht.

6. Pigmente gemäß einem oder mehreren der Ansprüche 1 bis 5, **dadurch gekennzeichnet, dass** das Substrat zusätzlich partikuläre und/oder gelöste Farbmittel in einem Anteil von bis zu 20 Gew.-%, bezogen auf die Gesamtmasse des Substrates, enthält.

7. Verfahren zur Herstellung von optisch variablen Pigmenten gemäß einem oder mehreren der Ansprüche 1 bis 6, umfassend die folgenden Schritte:

a) optional Beschichten eines plättchenförmigen Substrates, welches mindestens eine Dicke von 80 nm sowie eine Ausdehnung in Länge und Breite zwischen 5 und 60 $\mu$m aufweist und zu mindestens 80 Gew.-%, bezogen auf die Gesamtmasse des Substrates, aus Siliziumdioxid und/oder Siliziumoxidhydrat besteht, mit mindestens einem Schichtpaket aus einer dielektrischen Schicht mit einer Brechzahl n $\geq$ 1,8 und einer dielektrischen Schicht mit einer Brechzahl n < 1,8, wobei die Schicht mit einer Brechzahl n $\geq$ 1,8 unmittelbar auf dem Substrat sowie optional zusätzlich auf der Schicht mit einer Brechzahl n < 1,8 aufgebracht wird, mit der Maßgabe, dass jeweils eine Schicht mit einer Brechzahl n < 1,8 direkt unterhalb der elektrisch leitfähigen Schicht aufgebracht wird, wobei ein Trägerplättchen erhalten wird,
b) umhüllendes Beschichten des in Schritt a) erhaltenen Trägerplättchens mit einer elektrisch leitfähigen Schicht aus einem mit Antimon dotiertem Zinnoxid.

8. Verfahren gemäß Anspruch 7 **dadurch gekennzeichnet, dass** die Beschichtung des plättchenförmigen Substrates im Sol-Gel-Verfahren oder nasschemisch aus anorganischen Ausgangsstoffen erfolgt.

9. Verwendung von Pigmenten gemäß einem oder mehreren der Ansprüche 1 bis 6 in Farben, Lacken, Druckfarben, Kunststoffen, in Sicherheitsanwendungen, Fußbodenbelägen, Folien, Formulierungen, keramischen Materialien, Gläsern, Papier, zur Lasermarkierung, im Wärmeschutz, in Trockenpräparaten oder in Pigmentpräparationen.

10. Verwendung gemäß Anspruch 9, **dadurch gekennzeichnet, dass** die Pigmente mit organischen und/oder anorganischen Farbmitteln und/oder anderen elektrisch leitfähigen Materialien im Gemisch eingesetzt werden.

## Claims

1. Pigments comprising a flake-form substrate, which has at least a thickness of 80 nm and a length and width dimension between 5 and 60 $\mu$m and consists of at least 80% by weight, based on the total weight of the substrate, of silicon dioxide and/or silicon oxide hydrate, and an electrically conductive layer comprising antimony-doped tin oxide having a layer thickness of 20 to 50 nm surrounding the substrate, where the proportion of the electrically conductive layer, based on the substrate, is 20 to 40% by weight.

2. Pigments according to Claim 1, **characterised in that** at least one layer package consisting of a dielectric layer having a refractive index n $\geq$ 1.8 and a dielectric layer having a refractive index n < 1.8 is located between the substrate and the electrically conductive layer, where the layer having a refractive index n $\geq$ 1.8 is located directly on the substrate and optionally on the layer having a refractive index n < 1.8, with the proviso that a layer having a refractive index n < 1.8 is in each case arranged immediately below the electrically conductive layer.

3. Pigments according to Claim 1 or 2, **characterised in that** the substrate is an $SiO_2$ flake.

4. Pigments according to Claim 2 or 3, **characterised in that** the dielectric layer of a material having a refractive index n $\geq$ 1.8 consists of $TiO_2$, titanium oxide hydrate, titanium suboxides, $Fe_2O_3$, FeOOH, $SnO_2$, ZnO, Zr02, Ce203, CoO, $Co_3O_4$, $V_2O_5$, Cr203 and/or mixed phases thereof.

5. Pigments according to one or more of Claims 2 to 4, **characterised in that** the dielectric layer of a material having a refractive index n < 1.8 consists of $SiO_2$, silicon oxide hydrate, $Al_2O_3$, aluminium oxide hydrate, mixed phases thereof or $MgF_2$.

6. Pigments according to one or more of Claims 1 to 5, **characterised in that** the substrate additionally comprises particulate and/or dissolved colorants in a proportion of up to 20% by weight, based on the total weight of the substrate.

7. Process for the preparation of optically variable pigments according to one or more of Claims 1 to 6, comprising the following steps:

    a) optionally coating of a flake-form substrate, which has at least a thickness of 80 nm and a length and width dimension between 5 and 60 $\mu$m and consists of at least 80% by weight, based on the total weight of the substrate, of silicon dioxide and/or silicon oxide hydrate, with at least one layer package comprising a dielectric layer having a refractive index n $\geq$ 1.8 and a dielectric layer having a refractive index n < 1.8, where the layer having a refractive index n $\geq$ 1.8 is applied directly to the substrate and optionally additionally to the layer having a refractive index n < 1.8, with the proviso that in each case a layer having a refractive index n < 1.8 is applied immediately below the electrically conductive layer, giving a support flake,
    b) coating of the support flake obtained in step a) on all sides with an electrically conductive layer comprising antimony-doped tin oxide.

8. Process according to Claim 7, **characterised in that** the coating of the flake-form substrate is carried out by the sol-gel process or by wet-chemical methods from inorganic starting materials.

9. Use of pigments according to one or more of Claims 1 to 6 in paints, coatings, printing inks, plastics, in security applications, floor coverings, films, formulations, ceramic materials, glasses, paper, for laser marking, in heat protection, in dry preparations or in pigment preparations.

10. Use according to Claim 9, **characterised in that** the pigments are employed as a mixture with organic and/or inorganic colorants and/or other electrically conductive materials.

**Revendications**

1. Pigments comprenant un substrat sous forme de flocon(s), lequel présente au moins une épaisseur de 80 nm et des dimensions de longueur et de largeur entre 5 et 60 $\mu$m et est constitué par au moins 80% en poids, sur la base du poids total du substrat, de dioxyde de silicium et/ou d'hydrate d'oxyde de silicium, et une couche électriquement conductrice qui comprend de l'oxyde d'étain dopé à l'antimoine, qui présente une épaisseur de couche de 20 à 50 nm et qui entoure le substrat, dans lesquels la proportion de la couche électriquement conductrice, sur la base du substrat, est de 20 à 40% en poids.

2. Pigments selon la revendication 1, **caractérisés en ce qu'**au moins un ensemble de couches qui est constitué par une couche diélectrique qui présente un indice de réfraction n $\geq$ 1,8 et par une couche diélectrique qui présente un indice de réfraction n < 1,8 est situé entre le substrat et la couche électriquement conductrice, dans lesquels la couche qui présente un indice de réfraction n $\geq$ 1,8 est située directement sur le substrat et en option, sur la couche qui présente un indice de réfraction n < 1,8, étant entendu qu'une couche qui présente un indice de réfraction n < 1,8 est, dans chaque cas, agencée immédiatement au-dessous de la couche électriquement conductrice.

3. Pigments selon la revendication 1 ou 2, **caractérisés en ce que** le substrat est un flocon de $SiO_2$.

4. Pigments selon la revendication 2 ou 3, **caractérisés en ce que** la couche diélectrique d'un matériau qui présente un indice de réfraction n $\geq$ 1,8 est constituée du $TiO_2$, de l'hydrate d'oxyde de titane, des sous-oxydes de titane, du $Fe_2O_3$, du FeOOH, du $SnO_2$, du ZnO, du $ZrO_2$, du Ce203, du CoO, du $Co_3O_4$, du $V_2O_5$, du $Cr_2O_3$ et/ou des phases mixtes de ceux-ci.

5. Pigments selon une ou plusieurs des revendications 2 à 4, **caractérisés en ce que** la couche diélectrique d'un matériau qui présente un indice de réfraction n < 1,8 est constituée du $SiO_2$, de l'hydrate d'oxyde de silicium, de l'$Al_2O_3$, de l'hydrate d'oxyde d'aluminium, des phases mixtes de ceux-ci ou du $MgF_2$.

6. Pigments selon une ou plusieurs des revendications 1 à 5, **caractérisés en ce que** le substrat comprend de façon additionnelle des colorants particulaires et/ou dissous selon une proportion qui va jusqu'à 20% en poids, sur la base du poids total du substrat.

**7.** Procédé pour la préparation de pigments optiquement variables selon une ou plusieurs des revendications 1 à 6, comprenant les étapes qui suivent :

a) en option, le recouvrement d'un substrat sous forme de flocon(s), lequel présente au moins une épaisseur de 80 nm et des dimensions de longueur et de largeur entre 5 et 60 μm et est constitué par au moins 80% en poids, sur la base du poids total du substrat, de dioxyde de silicium et/ou d'hydrate d'oxyde de silicium, par au moins un ensemble de couches qui comprend une couche diélectrique qui présente un indice de réfraction n ≥ 1,8 et une couche diélectrique qui présente un indice de réfraction n < 1,8, dans lequel la couche qui présente un indice de réfraction n ≥ 1,8 est appliquée directement sur le substrat et en option, de façon additionnelle sur la couche qui présente un indice de réfraction n < 1,8, étant entendu que dans chaque cas, une couche qui présente un indice de réfraction n < 1,8 est appliquée immédiatement au-dessous de la couche électriquement conductrice, d'où la constitution d'un flocon de support,
b) le recouvrement du flocon de support qui est obtenu au niveau de l'étape a) sur tous les côtés par une couche électriquement conductrice qui comprend de l'oxyde d'étain dopé à l'antimoine.

**8.** Procédé selon la revendication 7, **caractérisé en ce que** le recouvrement du substrat sous forme de flocon(s) est mis en oeuvre au moyen du procédé sol-gel ou au moyen de procédés chimiques par voie humide à partir de matériaux de départ inorganiques.

**9.** Utilisation de pigments selon une ou plusieurs des revendications 1 à 6 dans les peintures, les revêtements, les encres d'impression, les matières plastiques, les applications de sécurité, les revêtements de sol, les films, les formulations, les matériaux de céramique, les verres, le papier, pour le marquage au laser, en matière de protection thermique, dans les préparations sèches ou dans les préparations de pigments.

**10.** Utilisation selon la revendication 9, **caractérisée en ce que** les pigments sont employés en tant que mélange avec des colorants organiques et/ou inorganiques et/ou d'autres matériaux électriquement conducteurs.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3842330
- DE 4237990
- EP 0139557 A
- EP 0359569 A
- EP 0743654 A
- EP 310340 A
- EP 0944097 A1
- WO 9308237 A
- EP 139557 A
- DE 1467468
- DE 1959998
- DE 2009566
- DE 2214545
- DE 2215191
- DE 2244298
- DE 2313331
- DE 2522572
- DE 3137808
- DE 3137809
- DE 3151355
- DE 3211602
- DE 3235017

**In der Beschreibung aufgeführte Nicht-Patentliteratur**

- **R. GLAUSCH ; D. BRÜCKNER ; R. MAISCH.** *Farbe und Lack,* 1990, vol. 96 (6), 412-415
- **R. GLAUSCH ; M. KIESER ; R. MAISCH ; G. PFAFF ; J. WEITZEL.** Perlglanzpigmente. Curt Vincentz Verlag, 1996, 83 ff